# EUROPEAN PATENT APPLICATION

(11) **EP 4 737 762 A1**
(43) Date of publication of application: **06.05.2026**
(21) Application number: 25211467.3
(22) Date of filing: 27.10.2025
(51) Int. Cl.: F16H 1/16, F16H 55/06, F16H 55/22

(54) **POWER TRANSMISSION RESIN GEAR AND METHOD OF PRODUCING POWER TRANSMISSION RESIN GEAR**

(30) Priority: 01.11.2024 JP 2024192977
(71) Applicant: JTEKT Corporation, Kariya-shi, Aichi 448-8652 (JP); Nakanishi Metal Works Co., Ltd., Osaka-shi, Osaka 530-8566 (JP)
(72) Inventor: UEDA, Hirofumi, Aichi 448-8652 (JP); KIKUCHI, Arata, Aichi 448-8652 (JP); YAMAMOTO, Taichi, Aichi 448-8652 (JP); NAKAMURA, Masayoshi, Osaka 530-8566 (JP); NAKA, Yukimasa, Osaka 530-8566 (JP)
(74) Representative: Betten & Resch

(57) **Abstract**

A power transmission resin gear 1 includes an annular resin part 3 having, on an outer peripheral surface thereof, teeth 10 of a gear. The annular resin part 3 includes an annular inner resin member 4 that covers an outer periphery of a core metal 2 and an annular outer resin member 5 that covers an outer periphery of the annular inner resin member 4. The annular inner resin member 4 has a plurality of axially downgauged portions 6 arranged at intervals in a circumferential direction. The annular outer resin member 5 has filling portions 8 respectively filling the axially downgauged portions 6 and an axial surface covering portion 9 that is located radially inward RI of a tooth side 10C of the teeth 10 and covers the filling portions 8.

According to the power transmission resin gear 1, deformation of a molded product due to forcible removal can be reduced without preparing a special tooth shape.

## Description

### Field

The present invention relates to a power transmission resin gear that includes a core metal and an annular resin part.

### Background

For the power transmission resin gear that includes the core metal and the annular resin part covering an outer periphery of the core metal, there has been a worm wheel, for example, to be used in combination with a worm in a worm gear reducer (see Patent Literatures (PTLs) 1 to 3, for example), in order to meet the needs for weight reduction and quietness.

In the case where teeth of the worm wheel are formed on an outer peripheral surface of the annular resin part through injection molding, each of the teeth has an undercut shape with respect to a mold that molds the teeth. Due to the undercut shape, the worm wheel that is a molded product will be forcibly removed from the mold when taken out of the mold. This causes the teeth of the worm wheel that has been taken out of the mold to be deformed.

In PTL 1, a number of slide cores for molding tooth grooves are arranged radially around a core, and the slide cores are supported to be retractable in a radial direction. Such a mold structure avoids forcible removal.

In PTL 2, a special tooth shape is molded in a mold that opens and closes in an axial direction. A tooth bottom of a half of the width of the tooth on a side far from a mold split surface of the mold is made in parallel to the axial direction. This configuration avoids the forcible removal.

In PTL 3, a special tooth shape is molded in a mold that opens and closes in the axial direction. A shape of the tooth on a side far from a mold split surface of the mold has a smaller undercut amount. This configuration enables forcible removal.

### Citation List

### Patent Literature

PTL 1: Japanese Unexamined Patent Application Publication No. 2002-254478
PTL 2: Japanese Unexamined Utility Model Application Publication No. Hei. 4-49254
PTL 3: Japanese Unexamined Patent Application Publication No. 2009-41595

### Summary

### Technical Problem

If the mold structure including the slide cores as in PTL 1 is used, difficulty in production of molds increases. Specifically, a mold becomes large, cost of the mold increases, and productivity is lowered. In addition, burrs occurring on a split surface of the slide cores may degrade the quality of a molded product.

If the aforementioned special tooth shape as in PTL 2 is used, it is necessary to change design specifications for a tooth shape of the worm wheel. In addition, a tooth thickness of the worm wheel is reduced and a surface in contact with a worm that engages the worm wheel is reduced, causing strength of the worm wheel to be lowered.

If the aforementioned special tooth shape as in PTL 3 is used, it is necessary to change design specifications of a tooth shape of the worm wheel. In addition, a molded product will be forcibly removed from a mold, so that deformation of the molded product cannot be controlled.

An object of the present invention is to provide a power transmission resin gear that can prevent deformation of a molded product due to forcible removal, without preparing a special tooth shape.

### Solution to Problem

A power transmission resin gear according to the first aspect of the present invention includes an annular resin part having, on an outer peripheral surface thereof, teeth of a gear. The annular resin part includes an annular inner resin member that covers an outer periphery of a core metal and an annular outer resin member that covers an outer periphery of the annular inner resin member. The annular inner resin member has a plurality of axially downgauged portions arranged at intervals in a circumferential direction. The annular outer resin member has filling portions respectively fill the axially downgauged portions and an axial surface covering portion that is located radially inward of a tooth side of the teeth and covers the filling portions.

According to a power transmission resin gear of the second aspect of the present invention in the power transmission resin gear of the first aspect, each of the teeth has a tooth bottom with an arc shape that fits an outer peripheral shape of a worm, and a tooth surface that is a curved surface with an arc shape, and the power transmission resin gear serves as a worm wheel to be used as a worm gear reducer in combination with the worm.

A power transmission resin gear of the third aspect of the present invention in the power transmission resin gear of the first aspect or the second aspect further includes a plurality of axial protrusions arranged at intervals in the circumferential direction on an outer peripheral surface of the annular inner resin member, the outer peripheral surface being located radially inward of the teeth on an outer peripheral surface of the annular outer resin member. The axially downgauged portions are located radially inward of the axial protrusions.

A method of producing a power transmission resin gear according to the fourth aspect of the present invention is a method of producing a power transmission resin gear that includes an annular resin part having, on an outer peripheral surface thereof, teeth of a gear. The annular resin part includes an annular inner resin member that covers an outer periphery of a core metal and an annular outer resin member that covers an outer periphery of the annular inner resin member. The annular inner resin member has a plurality of axially downgauged portions arranged at intervals in a circumferential direction. The annular outer resin member has filling portions respectively filling the axially downgauged portions and an axial surface covering portion that is located radially inward of a tooth side of the teeth and covers the filling portions.

The method includes a primary molding step and a secondary molding step. In the primary molding step, molten resin for the primary molding step is injected in a cavity of a primary-molding mold in a state where the core metal is set in the primary-molding mold opening and closing in an axial direction, so as to mold the annular inner resin member through injection molding, thereby producing a primary-molded product including the core metal and the annular inner resin member. In the secondary molding step, molten resin for the secondary molding step is injected in a cavity of a secondary-molding mold in a state where the primary-molded product is set in the secondary-molding mold opening and closing in the axial direction, so as to mold through the injection molding the annular outer resin member provided with the teeth. The filing portions and the axial surface covering portion in the annular outer resin member are located on a side of the secondary-molding mold, in which a mold sprit surface of the secondary-molding mold is located.

In the power transmission resin gear and the method of producing a power transmission resin gear, according to the present invention, the annular resin part includes the annular inner resin member that covers the outer periphery of the core metal and the annular outer resin member that covers the outer periphery of the annular inner resin member. The annular inner resin member has the plurality of axially downgauged portions arranged at intervals in the circumferential direction. The annular outer resin member has the filling portions respectively filling the axially downgauged portions of the annular inner resin member and the axial surface covering portion that is located radially inward of the tooth side of the teeth and covers the filling portions.

At a time when the primary-molded product including the core metal and the annular inner resin member is set in the secondary-molding mold to mold the power transmission resin gear, the filing portions and the axial surface covering portion are located on a side of the secondary-molding mold, in which the mold sprit surface of the secondary-molding mold is located. When a molded product is removed from the secondary-molding mold, an amount of deformation of the teeth radially outward is reduced by the axially downgauged portions of the annular inner resin member, which are located radially inward of the tooth side of the teeth, as well as the filling portions and the axial surface covering portion in the annular outer resin member. The teeth on the outer peripheral surface of the annular outer resin member, which have been deformed radially outward due to forcible removal, are returned radially inward by molding contraction of the axial surface covering portion that is located radially inward of the tooth side of the teeth and covers the filling portions. Therefore, the amount of the deformation due to the forcible removal is further reduced.

### Advantageous Effects

According to the power transmission resin gear and the method of producing a power transmission resin gear in the present invention, the axially downgauged portions of the annular inner resin member, the filling portions respectively filling the axially downgauged portions and the axial surface covering portion that is located radially inward of the tooth side of the teeth and covers the filling portions in the annular outer resin member are provided to reduce the deformation of a molded product due to the forcible removal without preparing a tooth with a special shape.

### Brief Description of Drawings

FIG. 1 is a perspective view of a power transmission resin gear according to an embodiment of the present invention.
FIG. 2 is a front view of the power transmission resin gear.
FIG. 3 is a vertical cross-sectional view of the power transmission resin gear.
FIG. 4 is a perspective view of a primary molded product according to the embodiment of the present invention.
FIG. 5 is a front view of the primary molded product.
FIG. 6 is a perspective view of a core metal according to the embodiment of the present invention.
FIG. 7A is a vertical cross-sectional view showing a state in which an annular outer resin member is molded through injection molding in a secondary molding step. A fixed side mold and the like are omitted.
FIG. 7B is a vertical cross-sectional view of a molded product in the process of removal from a secondary-molding mold after the injection molding, cooling, and solidification in the secondary molding step.
FIG. 7C is a vertical cross-sectional view of the molded product removed from the secondary-molding mold.
FIG. 8 shows a first modification of axially downgauged portions in an annular inner resin member.
FIG. 9 shows a second modification of the axially downgauged portions in the annular inner resin member.
FIG. 10 shows a third modification of the axially downgauged portions in the annular inner resin member.
FIG. 11 shows a fourth modification of the axially downgauged portions in the annular inner resin member.

### Description of Embodiments

Hereinafter, embodiments of the present invention will be described in detail with reference to the attached drawings.

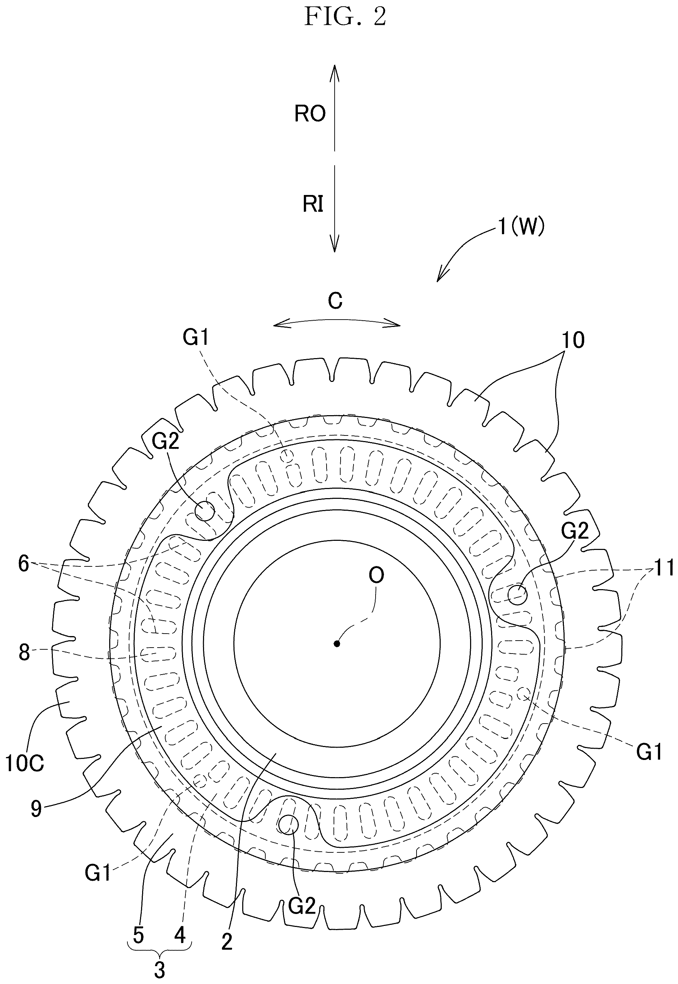

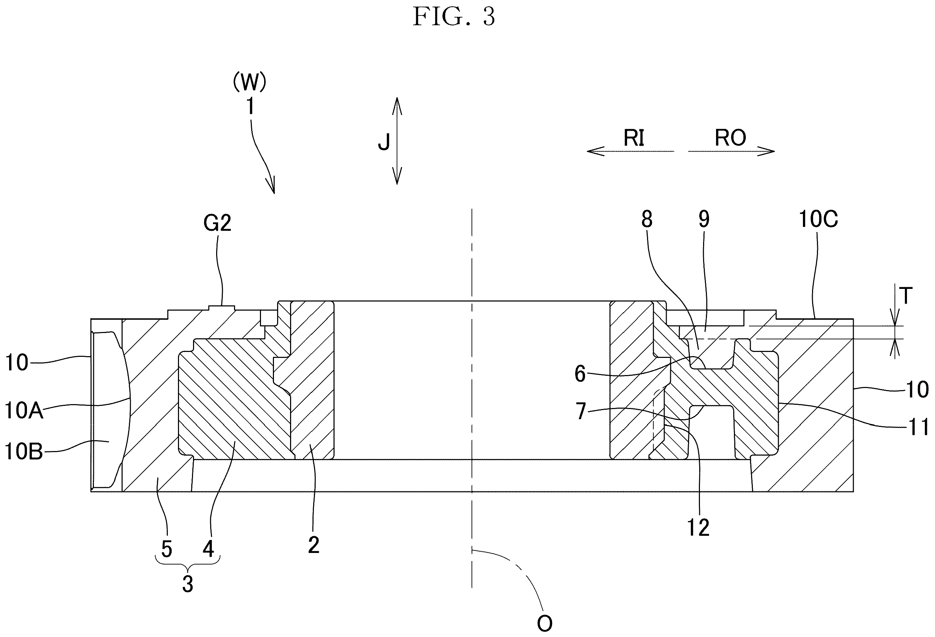

In the description, a direction parallel to the axis of rotation (reference symbol O in FIGS. 2 and 3) of a power transmission resin gear 1 is referred to as an "axial direction" (reference symbol J). A "radial direction" and a "circumferential direction (reference symbol C)" are defined with reference to the axis. A radial direction approaching the axis is referred to as "radially inward" (reference symbol RI) and a radial direction moving away from the axis is referred to as "radially outward" (reference symbol RO). A view seen in the axial direction is defined as a front view.

### [Power transmission resin gear]

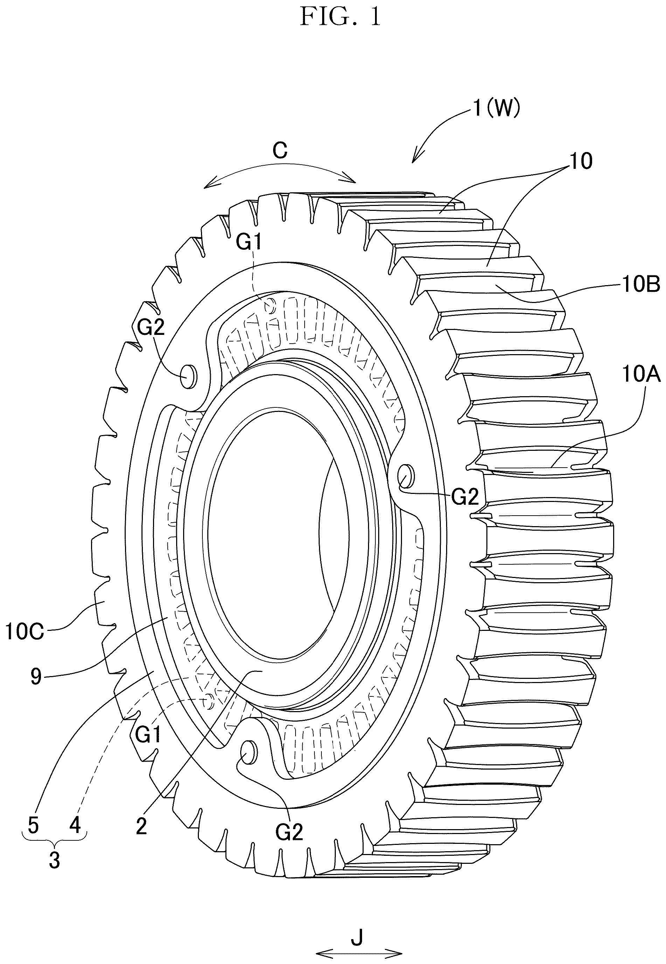

As shown in FIGS. 1 to 3, the power transmission resin gear 1 includes a metallic core metal 2 and an annular resin part 3 that covers an outer periphery of the core metal 2. On an outer peripheral surface of the annular resin part 3, teeth 10 are arranged at equal intervals in the circumferential direction C.

In the present embodiment, the power transmission resin gear 1 serves as a worm wheel W to be engaged with a worm. As shown in FIGS. 1 and 3, each of the teeth 10 has a tooth bottom 10A in the form of an arc that fits an outer peripheral shape of the worm, and a tooth surface 10B that is a curved surface in the form of an arc. A worm gear reducer including the worm wheel W and the worm is used in, for example, electric power steering systems.

### [Core metal]

The core metal 2 is, for example, in the form of an annular sleeve as shown in FIGS. 1 to 3. Here, the core metal 2 may not be in the form of the annular sleeve, but have a shaft section.

### [Annular resin part]

As shown in FIGS. 1 to 3, the annular resin part 3 includes an annular inner resin member 4 and an annular outer resin member 5. The annular inner resin member 4 covers an outer periphery of the core metal 2, and the annular outer resin member 5 covers an outer periphery of the annular inner resin member 4. The annular inner resin member 4 is made of synthetic resin reinforced with glass fiber or other reinforcement materials, for example. The annular outer resin member 5 is made of, for example, synthetic resin that is not reinforced with the aforementioned reinforcement material, but may be made of synthetic resin reinforced with the aforementioned reinforcement material.

### [Axially downgauged portion]

As shown in FIGS. 2 to 5, the annular inner resin member 4 has, on one surface thereof in the axial direction J, a plurality of axially downgauged portions 6 arranged at intervals in the circumferential direction C. As shown in FIG. 3, the annular inner resin member 4 has, on the other surface thereof in the axial direction J, a plurality of axially downgauged portions 7 arranged at intervals in the circumferential direction C.

As shown in FIG. 2, the axially downgauged portions 6 are located radially inward RI of the teeth 10 of the power transmission resin gear 1. Similarly, the axially downgauged portions 7 shown in FIG. 3 are located radially inward RI of the teeth 10.

### [Filling portions and axial surface covering portion]

As shown in FIGS. 1 to 3, the annular outer resin member 5 has filling portions 8 respectively filling the axially downgauged portions 6, and an axial face covering portion 9 that is located radially inward RI of a tooth side 10C of the teeth 10 and covers the filling portions 8. A thickness T, in the axial direction, of the axial face covering portion 9 shown in FIG. 3 is 1 mm or more (T ≥ 1 mm). If the thickness T is less than 1 mm (T < 1 mm), resin flow to the axially downgauged portions 6 during the injection molding of the annular outer resin member 5 may become poor, resulting in insufficient molding of the filling portions 8.

### [Gate mark]

As shown in FIGS. 1 to 3, gate marks G2 created during the injection molding of the annular outer resin member 5 including the teeth 10 are on one surface of the power transmission resin gear 1 in the axial direction J, i.e., on the surface where the axial face covering portion 9 is located.

### [Method of producing power transmission resin gear]

A method of producing the power transmission resin gear 1 includes a primary molding step and a secondary molding step. In the primary molding step, the core metal 2 is used as an insert work and the annular inner resin member 4 is molded through the injection molding, thereby producing a primary molded product A. In the secondary molding step, the primary molded product A is used as the insert work, and the annular outer resin member 5 is molded through the injection molding, thereby producing the power transmission resin gear 1.

### [Primary molded product]

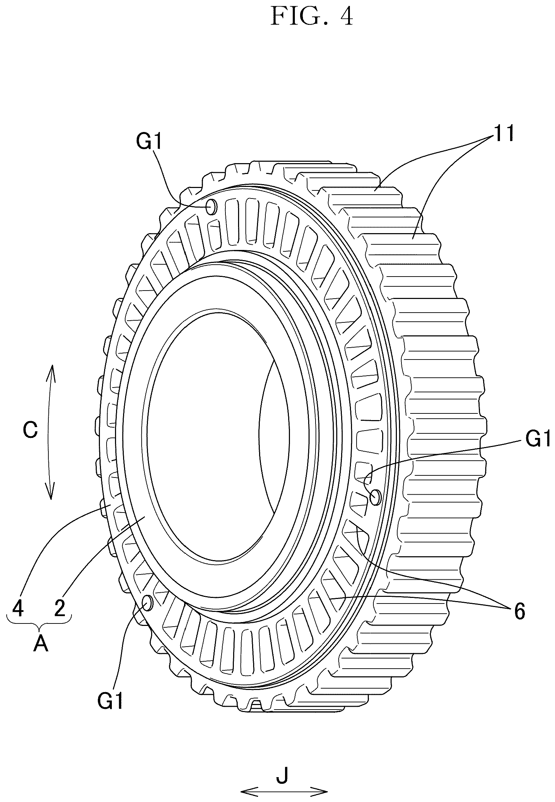

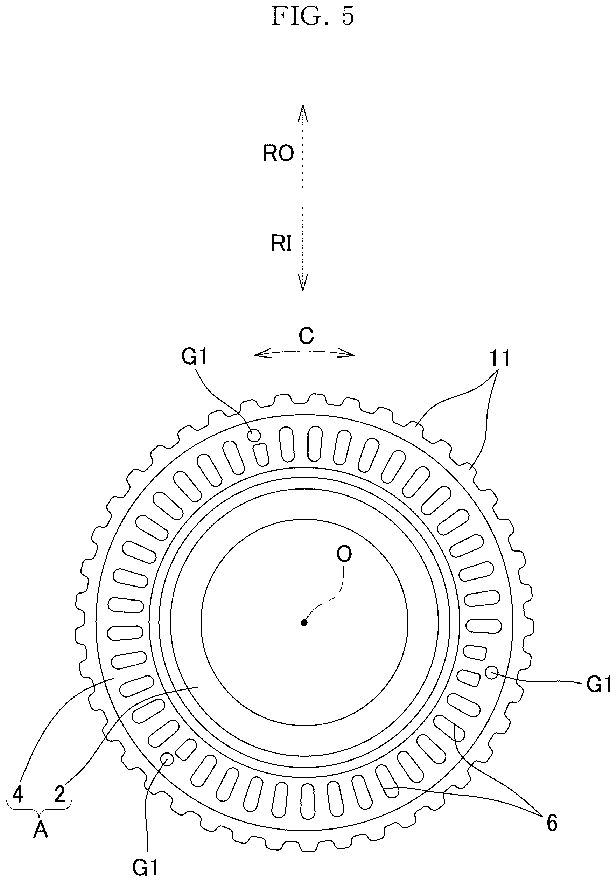

As shown in FIGS. 4 and 5, the primary molded product A includes the core metal 2 and the annular inner resin member 4. On the outer peripheral surface of the annular inner resin member 4, axial protrusions 11 are arranged at equal intervals in the circumferential direction C. The axially downgauged portions 6 and 7 are located radially inward RI of the axial protrusions 11.

### [Primary molding step]

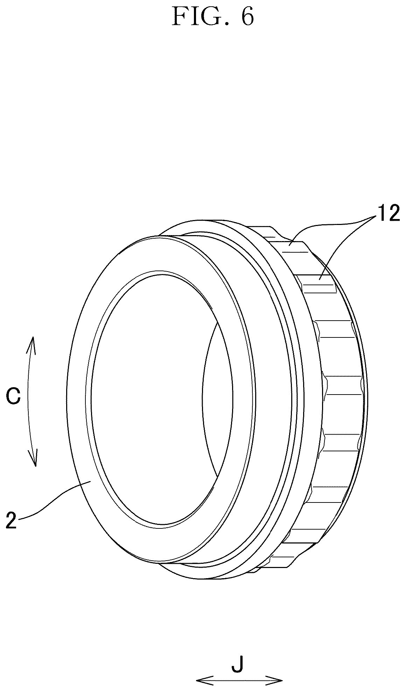

The core metal 2 shown in FIG. 6 is set in a primary-molding mold that opens and closes in the axial direction J. In this state, molten resin for the primary molding is injected from gates of the primary-molding mold into a cavity of the primary-molding mold to mold the annular inner resin member 4 through the injection molding, thereby producing the primary molded product A including the core metal 2 and the annular inner resin member 4.

The gates of the primary-molding mold are pin gates, for example. Accordingly, when the primary-molding mold is opened, the molded product can be separated from a runner, thereby eliminating the need for a gate treatment process. As shown in FIGS. 4 and 5, gate marks G1 created during the injection molding of the annular inner resin member 4 in the primary molded product A are located on one surface of the annular inner resin member 4 in the axial direction J, on which the axially downgauged portions 6 are located.

In the primary molded product A, axial protrusions 12 are arranged at equal intervals in the circumferential direction C on the outer peripheral surface of the core metal 2, as shown in FIG. 6. Accordingly, the annular inner resin member 4 is whirl-stopped relative to the core metal 2.

Each of the axial protrusions 11 on the outer peripheral surface of the primary molded product A (annular inner resin member 4) shown in FIGS. 4 and 5 does not have an undercut shape with respect to the primary-molding mold that opens and closes in the axial direction J. This configuration prevents the primary molded product A from being forcibly removed from the primary-molding mold.

### [Secondary molding step]

The primary molded product A is set in a secondary-molding mold that opens and closes in the axial direction J. In this state, molten resin for the secondary molding is injected from gates of the secondary-molding mold into a cavity of the secondary-molding mold to mold, through the injection molding, the annular outer resin member 5 in which the teeth 10 are provided, thereby producing the power transmission resin gear 1 including the core metal 2, the annular inner resin member 4, and the annular outer resin member 5. The teeth 10 shown in FIGS. 1 and 2 are formed during the injection molding of the annular outer resin member 5. Accordingly, there is no need for gear cutting after the secondary molding step.

The gates of the secondary-molding mold are pin gates, for example. Accordingly, when the secondary-molding mold is opened, the molded product can be separated from a runner, thereby eliminating the need for the gate treatment process. As shown in FIGS. 1 to 3, gate marks G2 created during the injection molding of the annular outer resin member 5 in the power transmission resin gear 1 are located on one surface of the annular outer resin member 5, on which the axial face covering portion 9 is located.

The axial protrusions 11 are arranged at equal intervals in the circumferential direction C on the outer peripheral surface of the primary molded product A (the annular inner resin member 4), as shown in FIGS. 4 and 5. Accordingly, the annular outer resin member 5 is whirl-stopped relative to the primary molded product A. As shown in FIGS. 2 and 5, the axial protrusions 11 of the annular inner resin member 4 are located radially inward RI of the teeth 10 of the annular outer resin member 5, and the axially downgauged portions 6 are located radially inward RI of the axial protrusions 11.

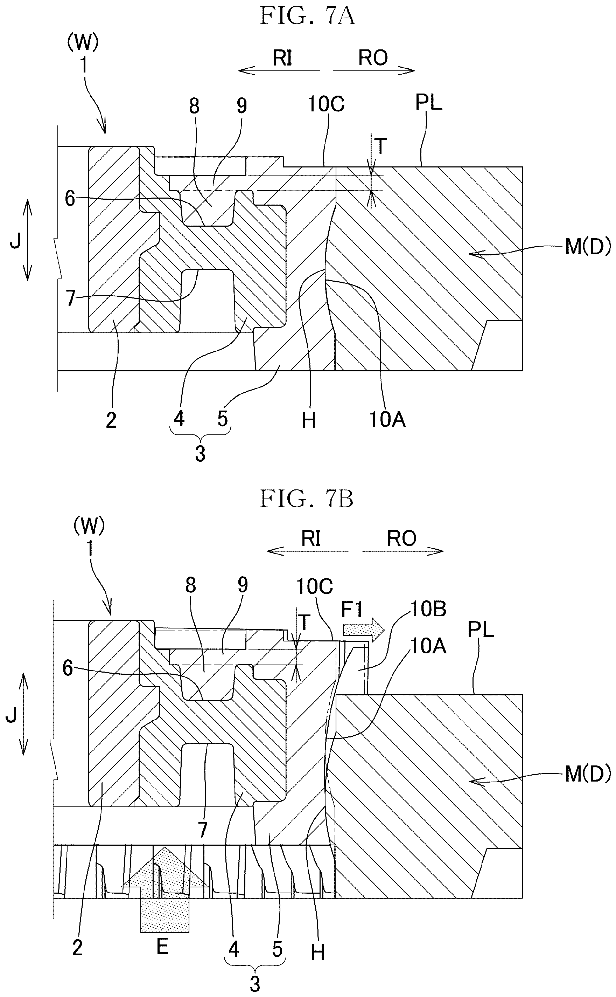

As shown in FIG. 7A, the filling portions 8 and the axial face covering portion 9 in the annular outer resin member 5 are located on a side of the secondary-molding mold D, in which a mold split surface PL of the secondary-molding mold D is located.

As shown in FIGS. 1 and 3, each of the teeth 10 on the outer peripheral surface of the annular outer resin member 5 has the tooth bottom 10A in the form of the arc that fits the outer peripheral shape of the worm, and the tooth surface 10B that is the curved surface in the form of the arc. Accordingly, each of the teeth has an undercut shape with respect to the secondary-molding mold (e.g., a movable mold M corresponding to the secondary-molding mold D in FIG. 7A) that opens and closes in the axial direction J.

Such a configuration causes the power transmission resin gear 1 to be forcibly removed from the mold, when the secondary-molding mold D shown in FIG. 7A is opened and the molded product, i.e., the power transmission resin gear 1, is ejected from the movable mold M as shown by an arrow E in FIG. 7B, after the injection molding, cooling, and solidification in the secondary molding step.

When the power transmission resin gear 1 that is the molded product is removed from the movable mold M, deformation propagates in the power transmission resin gear 1 while a part of the power transmission resin gear 1, which is pressed by a protrusion H of the movable mold M, moves. A part of the power transmission resin gear 1, which comes out of the mold split surface PL, is no longer restrained by the movable mold M. Accordingly, the tooth side 10C of the teeth 10 of the annular outer resin member 5, i.e., an end of a side of the teeth 10, in which the filling portions 8 and the axial face covering portion 9 in the annular outer resin member 5 are located, attempts to deform radially outward RO as shown by an arrow F1 in FIG. 7B.

### [Effects of axially downgauged portions, filling portions, and axial face covering portion]

In the power transmission resin gear 1 according to the embodiments of the present invention, the annular resin part 3 includes the annular inner resin member 4 that covers the outer periphery of the core metal 2 and the annular outer resin member 5 that covers the outer periphery of the annular inner resin member 4. The annular inner resin member 4 has the plurality of axially downgauged portions 6 arranged at intervals in the circumferential direction C. The annular outer resin member 5 includes the filling portions 8 respectively filling the axially downgauged portions 6 of the annular inner resin member 4 and the axial face covering portion 9 that is located radially inward RI of the tooth side 10C of the teeth 10 and covers the filling portions 8.

With this configuration, when the power transmission resin gear 1 that is a molded product is removed from the secondary-molding mold D, an amount of the deformation of the teeth 10 radially outward RO is reduced by the axially downgauged portions 6 of the annular inner resin member 4, which are located radially inward RI of the tooth side 10C of the teeth 10, as well as the filling portions 8 and the axial surface covering portion 9 in the annular outer resin member 5.

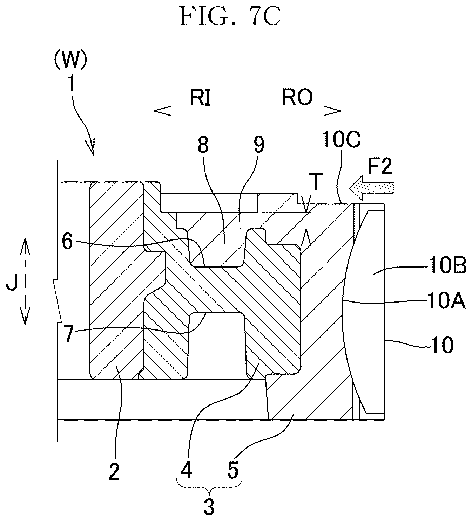

As shown in FIG. 7C, in a state where the power transmission resin gear 1 that is a molded product has been removed from the secondary-molding mold D, the teeth 10 in the outer peripheral surface of the annular outer resin member 5, which have been deformed radially outward RO due to the forcible removal, are returned radially inward RI as shown by an allow F2 by molding contraction of the axial surface covering portion 9 that is located radially inward RI of the tooth side 10C of the teeth 10 and covers the filling portions 8. Therefore, the amount of the deformation due to the forcible removal is further reduced.

As described above, the thickness T of the axial face covering portion 9 in the axial direction is 1 mm or more (T ≥ 1mm). Accordingly, the filling portions 8 can respectively fill the axially downgauged portions 6. In addition, the molding contraction of the axial face covering portion 9 provides an expected force that pulls the teeth 10 back radially inward RI, as shown by the arrow F2 in FIG. 7C. When T < 1 mm, the force that pulls the teeth 10 back radially inward RI may be lowered.

The axially downgauged portions 6, filling portions 8, and axial face covering portion 9 are provided to reduce the amount of the deformation of the teeth 10 radially outward RO due to the forcible removal to, for example, 20% or less compared to the case without providing them. Therefore, the deformation due to the forcible removal can be reduced without preparing a tooth with a special shape.

### [Modification of axially downgauged portion]

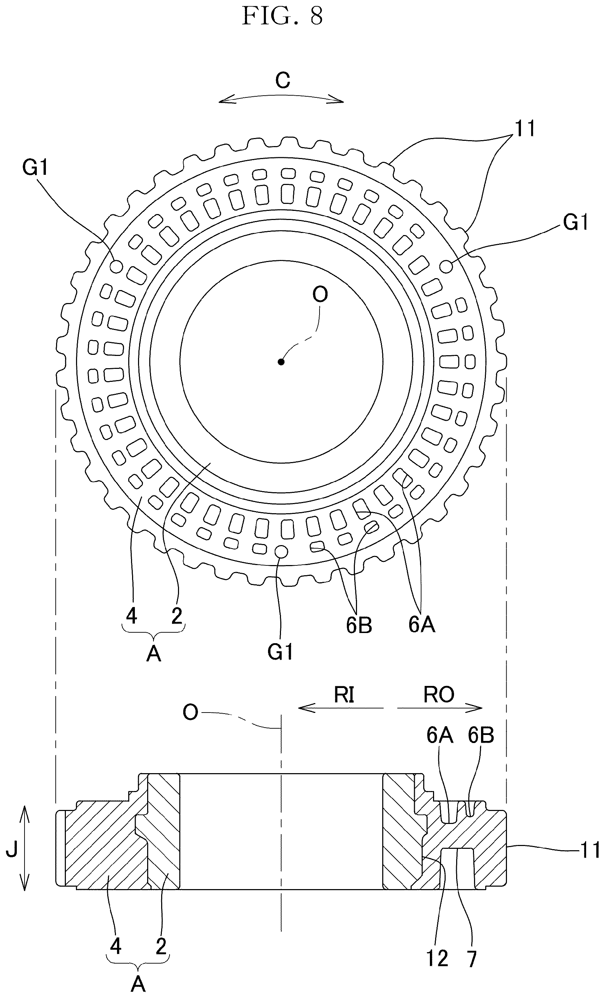

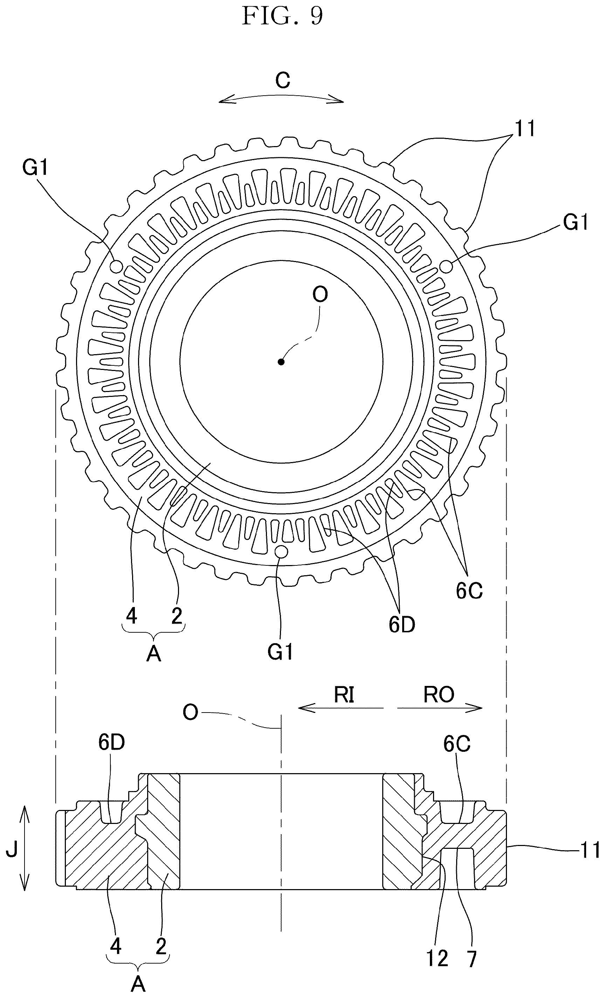

A shape of the axially downgauged portion to be provided in the annular inner resin member 4 is not limited to that of the axially downgauged portion 6, which is a substantially rounded rectangular shape viewed in the axial direction J as shown in FIGS. 3 and 5. For example, each axially downgauged portion 6 may be divided in the radial direction into axially downgauged portions 6A and 6B as in a first modification in FIG. 8, or a combination of axially downgauged portions 6C and 6D that are substantially triangular in shape when viewed in the axial direction J, as in a second modification in FIG. 9.

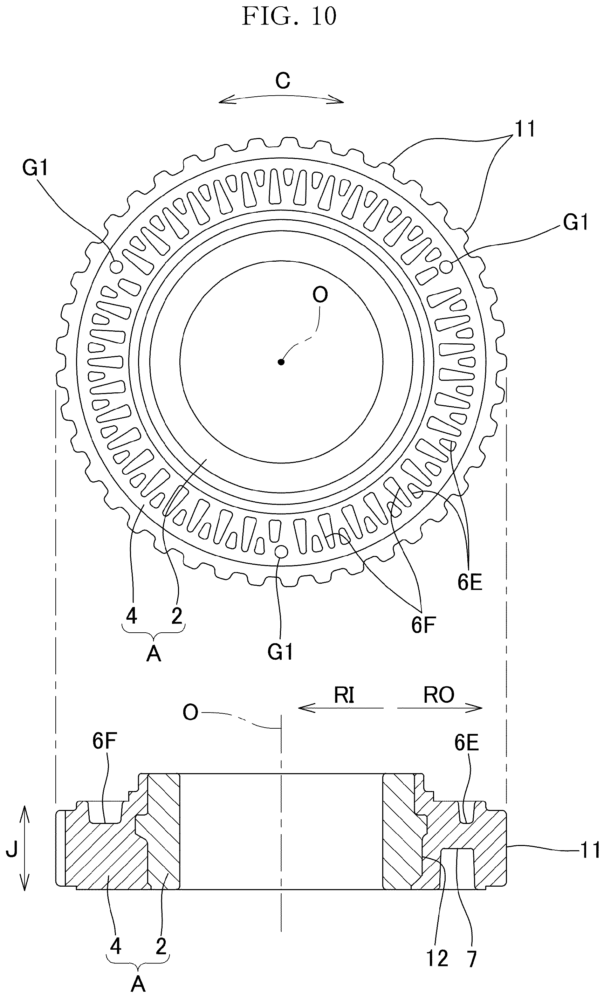

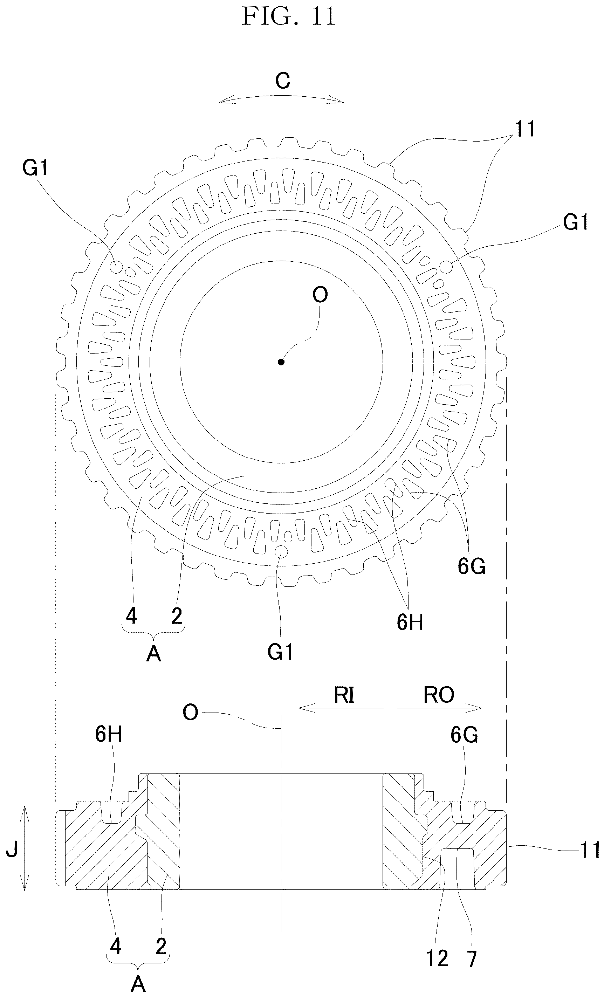

The combination of the axially downgauged portions that are substantially triangular in shape when viewed in the axial direction J may be axially downgauged portions 6E and 6F as in a third modification in FIG. 10, or axially downgauged portions 6G and 6H as in a fourth modification in FIG. 11.

The description of the above embodiments is entirely illustrative, and the present disclosure is not limited thereto. A variety of improvements and alterations can be made without departing from the scope of the present invention.

## Claims

1. A power transmission resin gear comprising:
an annular resin part having, on an outer peripheral surface thereof, teeth of a gear, wherein
the annular resin part includes an annular inner resin member that covers an outer periphery of a core metal and an annular outer resin member that covers an outer periphery of the annular inner resin member,
the annular inner resin member has a plurality of axially downgauged portions arranged at intervals in a circumferential direction, and
the annular outer resin member has filling portions respectively filling the axially downgauged portions and an axial surface covering portion that is located radially inward of a tooth side of the teeth and covers the filling portions.

2. The power transmission resin gear according to claim 1, wherein
each of the teeth has a tooth bottom with an arc shape that fits an outer peripheral shape of a worm, and a tooth surface that is a curved surface with an arc shape, and
the power transmission resin gear serves as a worm wheel to be used as a worm gear reducer in combination with the worm.

3. The power transmission resin gear according to claim 1 or 2, further comprising:
a plurality of axial protrusions arranged at intervals in the circumferential direction on an outer peripheral surface of the annular inner resin member, the outer peripheral surface being located radially inward of the teeth on an outer peripheral surface of the annular outer resin member, wherein
the axially downgauged portions are located radially inward of the axial protrusions.

4. A method of producing a power transmission resin gear that includes an annular resin part having, on an outer peripheral surface thereof, teeth of a gear,
the annular resin part including an annular inner resin member that covers an outer periphery of a core metal and an annular outer resin member that covers an outer periphery of the annular inner resin member,
the annular inner resin member having a plurality of axially downgauged portions arranged at intervals in a circumferential direction, and
the annular outer resin member having filling portions respectively filling the axially downgauged portions and an axial surface covering portion that is located radially inward of a tooth side of the teeth and covers the filling portions,
the method comprising:
a primary molding step; and
a secondary molding step, wherein
in the primary molding step, molten resin for the primary molding step is injected in a cavity of a primary-molding mold in a state where the core metal is set in the primary-molding mold opening and closing in an axial direction, so as to mold the annular inner resin member through injection molding, thereby producing a primary-molded product including the core metal and the annular inner resin member,
in the secondary molding step, molten resin for the secondary molding step is injected in a cavity of a secondary-molding mold in a state where the primary-molded product is set in the secondary-molding mold opening and closing in the axial direction, so as to mold through the injection molding the annular outer resin member provided with the teeth, and
the filing portions and the axial surface covering portion in the annular outer resin member are located on a side of the secondary-molding mold, in which a mold sprit surface of the secondary-molding mold is located.
